# EUROPEAN PATENT APPLICATION

(11) **EP 4 646 033 A1**
(43) Date of publication of application: **05.11.2025**
(21) Application number: 24173327.8
(22) Date of filing: 30.04.2024
(51) Int. Cl.: H05B 47/13

(54) **METHOD AND SENSOR SYSTEM FOR DETERMINING PRESENCE IN A DETECTION AREA AND OUTPUTTING AN INDICATION SIGNAL**

(71) Applicant: Tridonic GmbH & Co. KG, 6851 Dornbirn (AT)
(72) Inventor: Sapnil Gonsalves, Sudeep, 6851 Dornbirn (AT); Carracedo Cordovilla, Luis Javier, 6851 Dornbirn (AT)
(74) Representative: Beder, Jens

(57) **Abstract**

The invention regards a sensor system and a method for determining presence in a detection area and outputting a control signal. A signal sensed by a PIR sensor unit is supplied to a computing unit. The sensor system starts to output an indication signal indicative of presence of a person when a difference between a measurement value of the supplied signal and a reference value exceeds an initial presence detection threshold value, wherein the indication signal is maintained for a switch-on period. In a second period of a time interval, a portion of the supplied signal received in a first period of the time interval is analyzed with respect to the initial presence detection threshold value and an adapted presence detection threshold value to be applied in a following time interval is calculated based on the result of the analysis. In a second period of a succeeding time interval, a portion of the supplied signal received in a first period of the succeeding time interval is analyzed with respect to the adapted presence detection threshold value. Calculating an adapted presence detection threshold value and analyzing a portion of the supplied signal received in a succeeding time interval with respect to the adapted presence detection threshold value is repeated until a stop condition is fulfilled. The switch-on period is reset at the end of the actual time interval if, in that time interval, the difference between a measurement value of the supplied signal and the reference value exceeds the applicable presence detection threshold value.

## Description

The invention regards detection of presence of a person in a detection area and generating and outputting the respective indication signal for controlling switching of luminaires of a lighting system.

Automation of lighting systems is commonly known. In order to avoid unnecessary energy consumption of lighting systems, it is desired to switch on light only as long as it is necessary. Usually, this is achieved by integrating sensors in lighting systems that are capable to detect the presence or movements of persons in a detection area of the sensor. A plurality of different types of sensors are known. One type of sensors that are commonly used are PIR sensors. These sensors react on heat sources that are moving in the detection area of the sensor. When a heat source is moving in the detection area, this is interpreted as a person being present in the detection area of the sensor. Consequently, such PIR sensors output a signal allowing to control the lighting system such that in an area, where the sensor is mounted, luminaires are switched on. However, with such PIR sensors it is difficult to sense small movements. The changes in the signal which is obtained by sensing movements of the heat source need to exceed a threshold in order to accurately determine movement of the heat source. It is to be noted, that for the following explanations it will always be assumed that the moving heat source is a person for which switching the lighting system shall be controlled.

In case that the person moves for example by walking in the detection area, the resulting signal will have relatively high amplitude changes which can easily be compared with the threshold that allows to distinguish these amplitude changes from small amplitude changes caused by thermal noise or electric noise. Thus, such large movements allow to determine presence of the person with sufficient confidence. However, in situations where a person is present and the light shall be maintained switched on, it might be difficult when the person does not make any major movements. The situation often occurs in office spaces, in which the person sits at its desk after entering the room. The movements made by the person will be significantly smaller than walking through the detection area of the sensor. Nevertheless, even movements of the person working with a computer shall be detected to avoid switching off the light while the person is still in the detection area of the sensor. Such unwanted switching off of the light would cause destruction of a person working concentrated

While one approach could be to simply lower the fixed threshold so that smaller movements are also detected and the lighting system is controlled to be switched on, this has the disadvantage that the confidence whether a person has been detected or whether the switch on signal is triggered in error because of thermal noise and electrical noise is low. This is particularly problematic, because thermal noise may depend on the mounting situation of the sensor which requires setting different thresholds to avoid unwanted switching off..

It is therefore an object of the present invention to improve known sensors and methods for determining presence of a person in a detection area to avoid falsely switching on or off a lighting system.

The problem is solved with the method and sensor system according to the present invention. The dependent claims define advantageous further aspects.

The inventive method exploits the fact that analog PIR sensors output a signal in which the amplitude change and frequency depend on the movements of the person to be detected in the detection area such that larger movements result in signals with a higher amplitude differences from peak to peak and higher frequency. Such a signal, which is indicative of a motion in the detection area, is supplied to a computing unit of the sensor system, which analyses a portion of the supplied signal and adapts a presence detection threshold value for future detection of the presence of a person.

According to the invention, the method starts to output an indication signal indicative of presence of a person when a difference between the measured value of the supplied signal and a reference value exceeds an initial presence detection threshold value. Hereinafter this difference will also be referred to as "signal difference" for improved readability. The output indication signal is maintained for a switch-on period. A time interval that starts when the signal difference exceeds the initial presence detection value for the first time includes a first period of the time interval and a second period of the time interval. These periods may at least partially overlap. In the second period, a portion of the supplied signal received in the first period of the time interval is analyzed with respect to the initial presence detection threshold value. From the result of this analysis, an adapted presence detection threshold value is calculated, wherein this adapted presence detection threshold is a threshold to be applied in a following time interval for analyzing the supplied signal. The following time interval follows preferably directly after the initial time interval.

The adapted presence detection threshold value is used to analyze the supplied signal received in a first period of a succeeding time interval, which is analyzed in a second period of this succeeding time interval. The analysis is performed with respect to the adapted presence detection threshold value calculated in the preceding time interval. Similar to the analysis performed in the preceding time interval using the initial presence detection threshold, an analysis is now performed in the succeeding time interval for a portion of the supplied signal received in a first period of the succeeding time interval. This analysis using the adaptive threshold is performed in a second time period of the succeeding time interval.

The calculation of adapted presence detection threshold values and applying the same in an analysis of the supplied signal in the respectively following time interval is repeated until a stop condition is fulfilled. This means that in a sequence of time intervals, the applicable presence detection threshold value is calculated based on actual characteristics of the supplied signal in the respectively preceding time interval.

Further, the switch-on period is reset at the end of a time interval in case that in that time interval the signal difference of the supplied signal exceeds the applicable presence detection threshold for this particular time interval. This ensures that switching on the luminaire is performed with respect to a presence detection threshold value which is adapted over time.

With the present invention it is possible to adjust the presence detection threshold that must be exceeded by the signal difference of the measured and supplied signal to determine presence of a person so that the adapted presence detection threshold value can follow smaller signal differences caused by a reduced activity and smaller motions of the person to be detected. Since the calculation of the adapted presence detection threshold value for the succeeding time interval is based on characteristics of the supplied signal, it takes account of the motion characteristics of a person in the detection area of the sensor but also the actual environmental conditions leading to thermal noise of the sensor unit, because these are also reflected in the signal supplied for the analysis. Thus, in case that a person initially entering the detection area comes to rest and only small motions are reflected in the signal indicative of motions in the detection area, the applicable presence detection threshold value used for determining whether the person is present is adapted and even smaller motions of the person can trigger that the indication signal is output and the switch-on period is reset. This avoids the disadvantages of state-of-the-art solutions applying only a fixed presence detection threshold value which may not be exceeded by the signal difference when only smaller motions of a person are sensed which cause only small amplitude changes in the measurement signal. In essence, with the present invention it is possible to avoid that the lighting system is switched off although a person is still in the detection area but, for example, working concentrated at his desk with a computer.

Advantageously, the switch-on period is divided into an integer multiple of time intervals greater than 1. Even more preferred, the calculation of adapted presence detection threshold value is repeated at least twice, which means that preferably the switch-on period comprises at least three time intervals.

According to a preferred embodiment, the stop condition is fulfilled when the end of the switch-on period is reached. The stop condition avoids that the adaptation of the present detection threshold value is continuously repeated which might lead to unwanted effects. The end of the switch-on period is only reached in case that no presence of a person in the detection area can be determined. In such a case continuously repeating the calculation of the adapted presence detection threshold value would necessarily take into consideration signal portions that are only representative of thermal noise and electric noise.

According to preferred embodiment, the calculation of the adapted presence detection threshold value includes averaging the differences between the peak values and the reference value of all peaks for which the differences exceed the fixed minimum threshold and calculating the adapted presence detection threshold value as a fraction of this average. Defining the adapted presence detection threshold value as a fraction of the average in the preceding time interval ensures that over time the threshold value is reduced for typical scenarios in which switching on the lights is triggered by a major movement followed by periods with smaller movements. In such a situation, the threshold value will be lowered over time and a new switch-on period is triggered even by smaller movements of a person in the detection area. This avoids that the lights will be switched off thereby disturbing people are concentrated on their work.

Advantageously, after system start up the initial presence detection threshold value is set to a fixed minimum threshold value. System start is a situation in which the sensor system is powered for the first time or re-powered after mains failure, for example. On the other hand, in case that the system starts from a sleep mode in which no indication signal is output because no movement was recognized for a longer period of time, the initial presence detection threshold value is set to the last calculated adapted presence detection threshold value.

In case that the result of the calculation of the adapted presence detection threshold value would result in an adapted presence detection threshold value smaller that the fixed minimum threshold value, the adapted presence detection threshold value is set to the fixed minimum threshold value. The fixed minimum threshold value defines a range around the reference value in which the signal values of the supplied signal may fluctuate due to thermal noise and electrical noise. Setting the adapted presence detection threshold value to the fixed minimum threshold value has the advantage that a value below the fixed minimum threshold value will never cause the determination of presence of a person in the detection area. This avoids that the adaptation of the present detection threshold value by accident reduces the present detection threshold value to a level where unwanted determination of the present person occurs due to signal noise.

It is a further advantage of the present invention that the received signal can be analyzed for classifying time sections of the received signal into one of the following categories:
- low movement, not occupied,
- low movement, occupied,
- high movement, occupied, and
- high movement, not occupied.
Such classification into different situation classes allows to analyze behavior of people in a certain area or even adjust distribution of the sensors with respect to the actual use of the area.

Additional features and aspects of the present invention will now be explained in greater detail with reference to the attached drawings in which
Figure 1 is an overview over a sensor system according to the present invention included in the lighting system;
Figure 2 is an illustration of the time structure according to the present invention;
Figure 3 an illustration of an exemplary signal supplied and analyzed according to the present invention; and
Figure 4 is an illustration showing the advantage over the prior art systems.

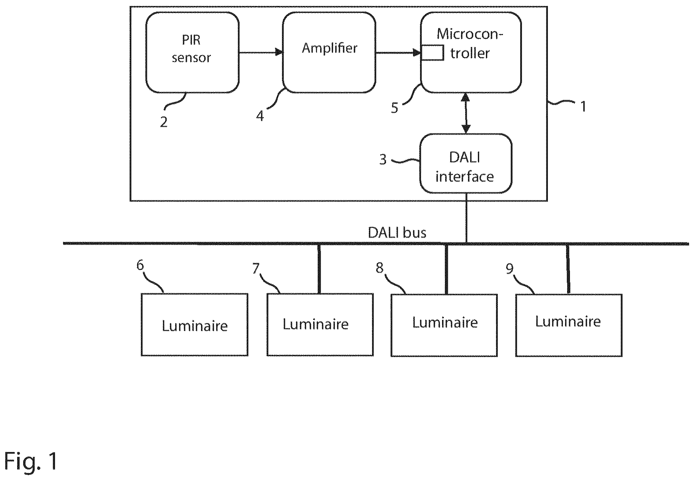

Figure 1 shows an overview over the sensor system 1 according to the present invention. The sensor system 1 comprises an analog PIR sensor unit 2 physically sensing the movements of a heat source in a detection area. The signal generated by the PIR sensor unit 2 is provided to an amplifier 4. The signal received from the PIR sensor unit 2 is amplified in the amplifier 4 and the amplified signal, which is a signal indicative of motion of the heat source in the detection area, is supplied to a computing unit, which is, is illustrated in the figure 1, a microcontroller 5. The microcontroller 5 comprises an analog to digital converter converting the supplied amplified signal received from the amplifier 4.

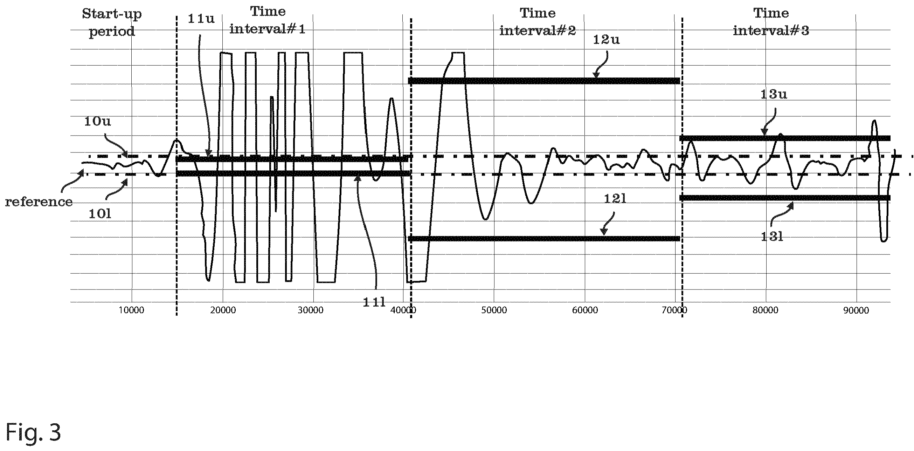

All calculations performed are based on the supplied signal after it is converted by the analog to digital converter of the microcontroller 5. The calculations performed on the supplied signal are explained later on with reference to figure 3 in greater detail.

The microcontroller 5 analyses the supplied signal in order to determine whether the supplied signal results from motion of a person being present in the detection area of the sensing system 1. In case that the analysis shows that the persons present in the detection area of the sensor system 1, an indication signal is output by the microcontroller 5. The output is provided to a DALI interface 3 in the present embodiment, which connects the sensor system 1 to the lighting system. In the illustration provided in figure 1, the lighting system is indicated by a plurality of luminaires 6 to 9 which are connected to a DALI bus. Since the sensor system 1 and the luminaires 6 to 9 are all connected to the same DALI bus, the luminaire's 6 to 9 can be switched on and off based on the indication signal which is output by the microcontroller 5 and forwarded via the DALI interface 3 to the luminaires 6 to 9.

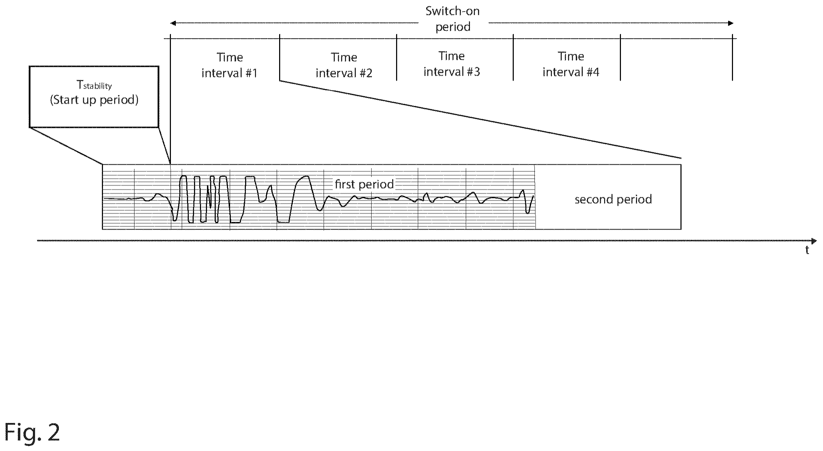

An example of a portion of the amplified signal which is provided by the amplifier 4 to the microcontroller 5 is shown in figure 2 together with a time structure used to analyze the supplied signal in order to adapt a threshold value for determining whether a person is present or not.

When the sensor system 1 is powered on, a start-up period begins during which no measurement can be made by the PIR sensor unit 2. Even in case that a person would cross the detection area, no signal would be generated by the PIR sensor unit 2. The sensor signal, which can be seen in this start-up period is a baseline, which represents a value output by the PIR sensor unit 2 which is also amplified by amplifier 4 and supplied to the microcontroller 5. Typically, the duration of such a start-up period is 30 seconds, but this duration depends on the manufacturer of the PIR sensor unit 2 or even the specific sensor unit type.

After the start up period, a switch-on period succeeds during which an indication signal is output in response to a determined presence in the detection area. Presence of a person in the detection area is determined when the signal difference exceeds a presence detecting threshold value used for the determination. An indication signal can be for example an output terminal of the microcontroller 5 set too "high". The switch-on period may be assumed to be 10 minutes, for example. Again, the duration of such switch-on period can vary between manufacturers or even according settings of the sensor unit 1. In the illustrated embodiment, the switch-on period is divided into five time intervals of equal duration, two minutes in the example of a 10 minute switch-on period.. Each of these time intervals is further divided into two successive time periods, a first period and a second period.

In the first period, the signal supplied to the microcontroller 5 is recorded. In the second period, the recorded supplied signal is then analyzed by the microcontroller 5. It is to be noted, that the relative portions of the first period in the second period may depend on the performance of the microcontroller 5. Further, it is also possible that analysis of the supplied signal which is recorded in the first period is started even before the end of the first period. While the illustrated embodiment shows a situation in which the first period and the second period are not overlapping, it is also possible to start with analyzing the supplied signal recorded in the first period before the end of the first period.

At the end of the second period during which an analysis of the portion of the supplied signal received in the first period, the succeeding time interval starts. The structure of the succeeding time intervals (#2 to #5) is the same as illustrated in greater detail for the time interval #1.

An important aspect of the present invention is that the signal received in the first period and analyzed in the second period of time interval #1 is analyzed with respect to a presence detection threshold value that is defined in the preceding time interval. Thus, for the time interval #1 an initial presence detection threshold value is used, because there is no preceding time interval but only the start-up period. Contrary, for the analysis performed in the second period of time interval #2, an adapted presence detection threshold value will be used which is calculated from the analysis in the second period of the time interval #1 of the portion of the supplied signal received during the first period of the time interval #1.

Similarly, the adapted presence detection threshold value used for the analysis performed in time interval #3 is the result of the analysis on the supplied signal performed in the second period of time interval #2. Thus, at the end of each time interval #1 to #4 the result of the analysis of the supplied signal received in that time interval #1 to #for provides an adapted presence detection threshold value which is used for the analysis in the respectively succeeding time interval #2 to #5.

This analysis of portions of the supplied signal and calculation of an adapted presence detection threshold value for the succeeding time interval is repeated until the end of the switch-on period, which is, in the illustrated embodiment the end of time interval #5. Only in case that the end of the switch-on period is reached, the stop condition is fulfilled and the calculation of a new adapted presence detection threshold value ends.

Figure 3 illustrates the adaptation of the presence detection threshold value from time interval to time interval in greater detail. During the start-up period, the signal fluctuates around its baseline, which defines a reference value. The reference value is the average of the baseline signal in the start-up period. A fixed minimum threshold value is stored in the sensor system 1. The stored fixed minimum threshold value is used to define a range around the reference value. If the actual signal has only values in this range around the reference value defined by the fixed minimum threshold value, no presence will be detected. The range is defined by an upper limit 10u calculated as the reference value plus the fixed minimum threshold value and a lower limit 101 calculated as the reference value minus the fixed minimum threshold value. This range is intended to cover changes in signal values caused by thermal noise and electrical noise and is the same for all sensor systems 1 of the same type independent from their actual mounting situation.

At the end of the start-up period, it can be seen that the signal amplified and supplied to the microcontroller 5 exceeds the upper limit 10u for the first time thereby starting the method according to the invention. When, after start-up, the upper limit 10u is exceeded for the first time (or equally the signal falls below the lower limit 101), the switch-on period is started and the first time interval #1 begins. In the first time interval #1, the upper limit 10u and the lower limit 101 are taken over as an upper threshold 1 1u and a lower threshold 11l, which means that the initial presence detection value corresponds to the fixed minimum threshold value. The initial presence detection value defines the difference between an upper threshold 11u and the reference value and equally the difference between a lower threshold 11l and the reference value.

The exemplary signal shown in figure 3 illustrates a situation where in time interval #1 a person making large movements is detected by the sensor system 1. Accordingly, the peak to peak difference in the signal amplitude is relatively large and also the frequency of the signal. In the analysis of the signal received in the time interval #1 (or to be more precise in the first period of the time interval #1), the microcontroller 5 averages all differences between the values of local maxima (upper peak values) and the reference value and all differences between the reference value and the values of the local minima (lower peak values) of the supplied signal for peaks that exceed the upper limit 10u or fall below the lower limit 101..

Based of this average the adapted presence detection threshold value is calculated. For example, the adapted presence detection threshold value is set to be 70% of the average value.

The adapted presence detection threshold value then defines a new upper limit and lower limit which is shown in the figure as upper limit 12u and lower limit 121 in the succeeding time interval #2.

The signal shown in this succeeding time interval #2 has portions with a significantly smaller amplitude and peak to peak difference which results from less movement being detected by the PIR sensor unit 2. Thus, only in the very beginning of this succeeding time interval #2, the upper peak (local maximum) of the signal lies above the upper limit 12u and the lower peak (local minimum) lies below the lower limit 121.

Again, a further adapted presence detection threshold value is calculated from the signal received in time interval #2 with respect to the adapted presence detection threshold value provided after the analysis in the second period of time interval #1. Thus, for each of the time intervals #1 to #5, a dedicated presence detection threshold value is applicable. In each of the time intervals #i, an adapted presence detection threshold value is calculated which is applicable in the succeeding time interval #i+1.

As shown for time interval #2, the supplied signal at least once exceeds the upper threshold 12u. The system resets the switch-on period during which the indication signal is maintained every time the supplied and amplified signal exceeds the upper threshold or falls below the lower threshold. Thus, as indicated in time interval #2, a new switch-on period will be triggered starting at the end of time interval #2. It is to be noted, that this is not illustrated in the figure.

It can be seen that the reduced amplitudes in time interval #2 results in a further reduced upper limit 13u an increased lower limit 131. The shift of the upper limit and lower limit 13u, 131 results in smaller peaks exceeding the upper limit of falling below the lower limit so that even smaller movements of a person in the detection area would trigger a new switch-on period.

Calculating adapted detection threshold values and applying them for the analysis of the supplied signal in the succeeding time interval is repeated until the end of a switch on period is reached. In the embodiment used for explaining the present invention, this happens when for four consecutive time intervals the supplied and amplified signal does not exceed the upper threshold or fall below the lower threshold. Only then no new switch-on period will be triggered.

In case that the end of the switch-on period is reached, the system falls in a kind of standby state in which no new adapted presence detection threshold value is calculated. However, in the standby state still the system will compare the supplied and amplified signal values with the upper threshold and lower threshold which is defined by the last calculated adapted presence detection threshold value in order to recognize when the actual signal exceeds the upper threshold or falls below the lower threshold. In such a case, the method as explained above will start again but with the latest calculated adapted presence detection threshold value as the initial presence detection value.

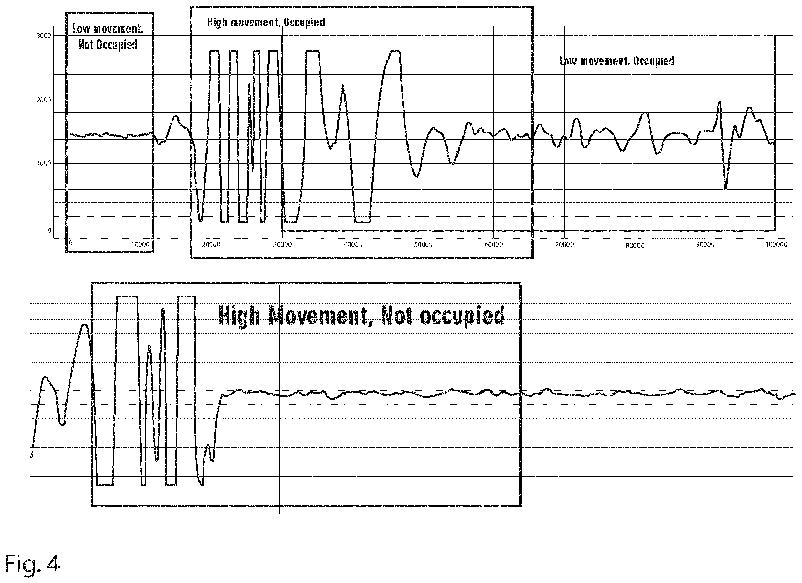

Figure 4 shows different situations that can be classified based on the signal supplied to the microcontroller.

## Claims

1. Method for determining presence in a detection area and outputting a control signal, the method comprising the following steps:
- supplying a signal indicative of a motion in the detection area,
- starting to output an indication signal indicative of presence of a person when a difference between a measurement value of the supplied signal and a reference value exceeds an initial presence detection threshold value, wherein the indication signal is maintained for a switch-on period,
- analyzing, in a second period of a time interval, a portion of the supplied signal received in a first period of the time interval with respect to the initial presence detection threshold value,
- calculating an adapted presence detection threshold value to be applied in a following time interval based on the result of the analysis,
- analyzing, in a second period of a succeeding time interval, a portion of the supplied signal received in a first period of the succeeding time interval with respect to the adapted presence detection threshold value,
wherein calculating an adapted presence detection threshold value and analyzing a portion of the supplied signal received in a succeeding time interval with respect to the adapted presence detection threshold value is repeated until a stop condition is fulfilled,
wherein the switch-on period is reset at the end of the actual time interval if, in that time interval, the difference between a measurement value of the supplied signal and the reference value exceeds the applicable presence detection threshold value.

2. Method according to claim 1, wherein the switch-on period is divided into an integer multiple of time intervals greater than 1.

3. Method according to claim 1 or 2, wherein the stop condition is fulfilled when the end of the switch-on period is reached.

4. Method according to any one of the preceding claims, wherein calculating the adapted presence detection threshold value comprises an evaluation of the number of peaks for which the difference between a peak value and the reference value exceeds the fixed minimum threshold and the differences between the peak values and the reference value.

5. Method according to claim 4, wherein the calculation of the adapted presence detection threshold value includes averaging the differences between the peak values and the reference value of all peaks for which the difference between the peak value and the reference value exceeds the fixed minimum threshold value and calculating the adapted presence detection threshold as a fraction of the average.

6. Method according to any one of the preceding claims, wherein after system start up the initial presence detection threshold value is set to a fixed minimum threshold value.

7. Method according to any one of the preceding claims, wherein in case that the result of the calculation of the adapted presence detection threshold value would result in an adapted presence detection threshold value smaller that the fixed minimum threshold value, the adapted presence detection threshold value is set to the fixed minimum threshold value.

8. Method according to any one of the preceding claims, wherein the supplied signal is analyzed for classifying time sections of the received signal into one of the following categories:
- low movement, not occupied,
- low movement, occupied,
- high movement, occupied, and
- high movement, not occupied.

9. Sensor system comprising an analog PIR sensor unit connected to a computing unit, wherein the computing unit is configured to perform the method steps defined in claims 1 to 8.
